# EUROPÄISCHE PATENTSCHRIFT

(11) **EP 3 976 995 B1**
(45) Veröffentlichungstag und Bekanntmachung des Hinweises auf die Patenterteilung: **14.08.2024**
(21) Anmeldenummer: 19728914.3
(22) Anmeldetag: 28.05.2019
(51) Int. Cl.: F16H 57/00, F16H 57/031, F16H 63/22, F16H 63/30, F16H 63/32

(54) **AUTOMATISIERTES SCHALTGETRIEBE**
SEMI-AUTOMATIC TRANSMISSION
BOÎTE DE VITESSES AUTOMATIQUE

(43) Veröffentlichungstag der Anmeldung: 06.04.2022
(73) Patentinhaber: ZF CV Systems Europe BV, 1170 Brussels (BE)
(72) Erfinder: GHAFARI, Mohamnad-Rez, 30519 Hannover (DE); WINTER, Simon, 31224 Peine (DE)
(74) Vertreter: Ohlendorf, Henrike
(86) Internationale Anmeldenummer: PCT/EP2019/063844
(87) Internationale Veröffentlichungsnummer: WO 2020/239207

(56) Entgegenhaltungen:
- EP-A1- 1 965 102
- DE-A1- 19 915 777
- DE-A1- 3 938 402
- JP-A- 2011 027 173
- US-A1- 2006 009 326

## Beschreibung

Die Erfindung betrifft ein automatisiertes Schaltgetriebe für ein Kraftfahrzeug, mit einem Getriebegehäuse, welches einen lösbaren Deckel aufweist, an dem eine Getriebeschalteinheit angeordnet ist, wobei die Getriebeschalteinheit Aktuatoren zur Betätigung von diesen jeweils zugeordneten Schaltgabeln aufweist, und bei dem mittels jeder Schaltgabel jeweils eine zugeordnete Schaltmuffe des Schaltgetriebes koaxial zu einer Getriebewelle verschiebbar ist.

EP1965102A1 betrifft im Allgemeinen ein Doppelkupplungsgetriebe für Kraftfahrzeuge mit sechs oder sieben Vorwärtsgängen und einem Rückwärtsgang und insbesondere eine servounterstützte Gangschaltsteuervorrichtung für das Doppelkupplungsgetriebe.

DE3938402A1 bezieht sich auf eine Gangwechsel-Steueranordnung bei einem Fahrzeug, das eine in einer Antriebsübertragungslinie montierte hydraulische Kupplung, ein hydraulisches Betätigungsmittel als Teil eines Schaltgetriebes sowie ein vorgesteuertes Umschaltventil, das in einer Ölleitung eingebaut ist, welche zu der hydraulischen Kupplung führt.

DE1991577A1, auf welchem die zweiteilige Anspruchsfassung basiert, offenbart ein Schaltgetriebe mit einem Getriebegehäuse, das mit einer Öffnung versehen ist, wobei der die Öffnung verschließende Deckel Stellvorrichtungen zum Betätigen von Schaltgabeln aufweist.

Bei einem Fahrzeug mit einer Brennkraftmaschine ist zu dessen Betrieb eine Anpassung der Drehzahl und/oder des Drehmoments des Antriebsmotors an den jeweils aktuellen Betriebszustand des Kraftfahrzeugs notwendig. Zu diesem Zweck ist die Kurbelwelle der Brennkraftmaschine über eine als Reibkupplung ausgebildete Schalt- und Trennkupplung mit einem manuell schaltbaren mechanischen Getriebe antriebstechnisch verbunden Die Kupplung ist dabei zur Kraftflussunterbrechung im Antriebsstrang während eines Gangwechsels des Getriebes erforderlich.

Unter anderem zur Erhöhung des Komforts kommen in modernen Kraftfahrzeugen verbreitet automatische Planetengetriebe zum Einsatz, wobei anstelle einer Kupplung in der Regel ein hydrodynamischer Drehmomentwandler vorgesehen ist. Aus Gründen der besseren Energieeffizienz sowie günstigerer Herstellkosten werden zu nehmend automatisierte schaltbare Getriebe genutzt, deren Übersetzungsstufen mit Hilfe einer Mehrzahl von Aktuatoren automatisch geschaltet werden. Im Gegensatz zu konventionellen Automatikgetrieben erfordern die automatisierten Schaltgetriebe keinen verlustbehafteten hydrodynamischen Drehmomentwandler, sondern arbeiten mit der mechanischen Reibkupplung zusammen, die anders als bei konventionellen mechanischen Handschaltgetriebe nicht vom Fahrer mittels eines Fußpedals sondern automatisch mit Hilfe eines zusätzlichen Kupplungsaktuators zur Vorbereitung eines Gangwechsels betätigt wird. Ein Gangwechsel im Getriebe wird dabei jeweils mittels einer durch einen zugeordneten Aktuator betätigbaren Schaltgabel durchgeführt, welche eine Schaltmuffe im Getriebe koaxial auf einer zugeordneten Getriebe welle verschiebt. Die jeweiligen Schaltmuffen verbinden dabei jeweils zugeordnete, als Losräder ausgebildete Zahnräder einer Gangstufe entweder drehfest mit der zugeordneten Getriebewelle oder geben diese drehbar frei.

Zur Betätigung der Schaltgabeln dient in einem solchen automatisierten Schaltgetriebe eine Getriebeschalteinheit, welche deckelartig an dem Getriebegehäuse angeordnet ist. Eine solche Getriebeschalteinheit trägt eine Mehrzahl von Aktuatoren, mittels denen die genannten, auf oder an Längsführungen axial beweglich gelagerten Schaltgabeln zur Ausführung eines Gangwechsels längsverschiebbar sind.

Der Erfindung lag die Aufgabe zugrunde, ein automatisiertes Schaltgetriebe vorzustellen, dessen Schaltbetätigungsmechanik zur Reduzierung der Herstellkosten sowie leichteren Montierbarkeit stark vereinfacht aufgebaut ist. Zudem sollte erreicht werden, dass Kippmomente, die durch die Betätigung der Schaltmuffen entstehen, nicht zu den Aktuatoren weitergeleitet werden.

Die Lösung dieser Aufgabe wurde mit einem automatisierten Schaltgetriebe erreicht, welches die Merkmale des Anspruchs 1 aufweist. Vorteilhafte Weiterbildungen sind in den abhängigen Ansprüchen definiert.

Die Erfindung betrifft demnach ein automatisiertes Schaltgetriebe für ein Kraftfahrzeug, mit einem Getriebegehäuse, welches einen lösbaren Deckel aufweist, an dem eine Getriebeschalteinheit angeordnet ist, wobei die Getriebeschalteinheit Aktuatoren zur Betätigung von diesen jeweils zugeordneten Schaltgabeln aufweist, und bei dem mittels jeder Schaltgabel jeweils eine zugeordnete Schaltmuffe des Schaltgetriebes koaxial zu einer Getriebewelle verschiebbar ist.

Zur Lösung der gestellten Aufgabe ist bei diesem Getriebe vorgesehen, dass in dem Getriebegehäuse eine parallel zu einer Längsachse des Schaltgetriebes verlaufende Längsführung befestigt ist, dass auf der Längsführung die wenigstens zwei Schaltgabeln längsverschiebbar aufgenommen sind, dass jede Schaltgabel einen in Bezug zur Längsführung exzentrisch angeordneten Koppelarm aufweist, dass jeder Aktuator eine axial verschiebbare Betätigungsstange mit einer Koppelgeometrie aufweist, und dass jeder Koppelarm im zusammengefügten Zustand von Deckel und Getriebegehäuse mit jeweils einer zugeordneten Koppelgeometrie eines jeweils zugeordneten Aktuators derart zusammenwirkt, dass Linearbewegungen der Betätigungsstangen der Aktuatoren auf die Schaltgabeln zur Verschiebung derselben auf der Längsführung übertragbar sind.

Aufgrund der lösbar ineinander greifenden Koppelarme der Schaltgabeln und Koppelgeometrien der Aktuatoren ist eine besonders schnelle Montage und Demontage des automatisierten Schaltgetriebes, insbesondere des Deckels mit der daran integrierten Getriebeschalteinheit auf dem Getriebegehäuse möglich. Eine Übertragung von etwaigen, durch die Schaltgabeln hervorgerufenen Kippmomenten in die Aktuatoren der Getriebeschalteinheit wird weitgehend vermieden. Darüber hinaus ist durch die in das Getriebegehäuse integrierte Längsführung eine gute Abstützung der angreifenden Momente erreicht.

Gemäß der vorliegenden Erfindung ist vorgesehen, dass die Bestätigungsstangen der Aktuatoren eine zylindrische Geometrie aufweisen, dass jede der Schaltgabeln eine hohlzylindrische Führungshülse mit einem Haltearm aufweist, und dass jeweils an einem von der Führungshülse weggerichteten Ende eines jeden Haltearms ein bogenförmiger Betätigungsabschnitt für den Eingriff in die jeweils zugeordnete Schaltmuffe ausgebildet ist. Hierdurch ist eine raumsparende Betätigung der zwischen den Zahnrädern des Schaltgetriebes befindlichen Schaltmuffen bei einer zugleich einfachen Montage der Schaltgabeln möglich.

Eine Weiterbildung der Erfindung sieht vor, dass jede der Schaltgabeln mittels ihrer Führungshülse auf der Längsführung parallel zu der Längsachse des Schaltgetriebes spielfrei verschiebbar aufgenommen ist. Infolgedessen ist eine mechanisch robuste Führung der Schaltgabeln auf der Längsführung gegeben. Gegebenenfalls kann eine Verdrehsicherung der Schaltgabeln auf der Längsführung vorgesehen sein. So können die Führungshülsen und die Längsführung beispielsweise jeweils eine unrunde oder mehreckige Querschnittgeometrie aufweisen. Zwischen den Führungshülsen besteht zumindest ein so großer Axialabstand, dass die Führungshülsen der Schaltgabeln soweit unabhängig voneinander axial verschiebbar sind, dass die Gangstufen des Getriebes durch axiales Verschieben der Schaltmuffen sicher individuell schaltbar sind.

Bei einem erfindungsgemäßen Schaltgetriebe mit einer Getriebeschalteinheit mit mindestens drei Aktuatoren, drei Schaltgabeln und drei Schaltmuffen ist vorgesehen, dass an der ersten Schaltgabel der erste Koppelarm in der Nähe der Führungshülse am zugeordneten Haltearm ausgebildet ist. Hierdurch lassen sich die Aktuatoren der Getriebeschalteinheit parallel zu deren Längsachse beabstandet zueinander anordnen. Zudem lässt sich die Führungshülse der ersten Schaltgabel im Wesentlichen frei von Kippmomenten auf der Längsführung axial verschieben.

Bei diesem Schaltgetriebe kann die Getriebeschalteinheit auch mehr als drei Aktuatoren aufweisen, beispielsweise einen vierten Aktuator, mit dem ein nachgeordnetes, als Planetengetriebe ausgebildetes Range-Getriebe hinsichtlich seiner zwei Getriebestufen umschaltbar ist.

Bei dem gerade genannten erfindungsgemäßen Schaltgetriebe mit seinen mindestens drei Schaltgabeln ist zudem vorgesehen, dass an der zweiten Schaltgabel der zweite Koppelarm am freien Ende des bogenförmigen Betätigungsabschnitts ausgebildet ist. Hierdurch ist eine besonders direkte, das heißt weitestgehend momentenarme Betätigung des bogenförmigen Betätigungsabschnitts der zweiten Schaltgabel durch den zugeordneten Aktuator der Getriebeschalteinheit möglich. Zudem ist gemäß der vorliegenden Erfindung an der dritten Schaltgabel der dortige dritte Koppelarm im Bereich des bogenförmigen Betätigungsabschnitts etwa mittig zwischen dessen freien Ende und dem Haltearm ausgebildet. Hieraus ergeben sich vom dritten Aktuator aufzubringende Betätigungsmomente und Betätigungskräfte, welche von deren Betrag ungefähr zwischen denen der ersten und zweiten Schaltgabel liegen.

Weiter kann mit Vorteil vorgesehen sein, dass das freie Ende der Koppelarme jeweils einen Koppelabschnitt aufweist, welche senkrecht zur Längsachse des Schaltgetriebes ausgerichtet sind sowie jeweils in Richtung zu den Betätigungsstangen der zugeordneten Aktuatoren weisen. Die Koppelabschnitte können dabei an deren freien Ende jeweils rechteckig oder quaderförmig oder halbkugelförmig ausgebildet sein. Insgesamt ist hierdurch ein leicht lösbares und beim Zusammenfügen von Deckel sowie Getriebegehäuse wieder herstellbares Interface zwischen den Schaltgabeln und den Aktuatoren realisiert. Zudem stellen die Koppelabschnitte jeweils eine Fortsetzung der Koppelarme dar, wodurch sich die Fertigung vereinfacht.

Bevorzugt weist jeder Koppelarm mindestens einen abgekröpften Abschnitt auf. Hierdruch ist eine erhöhte Flexibilität hinsichtlich der räumlichen Anordnung der Aktuatoren an der Innenseite des Deckels des Getriebegehäuses gegeben.

Gemäß der vorliegenden Erfindung ist vorgesehen, dass die Betätigungsstangen der Aktuatoren an der Innenseite des Deckels des Getriebegehäuses parallel zur Längsachse des Schaltgetriebes ausgerichtet angeordnet sind, und dass die jeweils freien Enden der Betätigungsstangen unmittelbar benachbarter Aktuatoren in axial entgegengerichtete Richtungen weisen. Hierdurch können bewährte Linearaktuatoren, wie zum Beispiel Druckluft- oder Hydraulikaktuatoren, sehr platzsparend nebeneinander angeordnet werden.

Weiter ist bevorzugt vorgesehen, dass jede Betätigungsstange eines Aktuators eine Koppelgeometrie aufweist, die jeweils durch eine quer zur Längsachse des Schaltgetriebes verlaufende Koppelnut gebildet ist, wobei im zusammengefügten Zustand von Getriebegehäuse und Deckel in jeder Koppelnut jeweils ein Koppelabschnitt eines Koppelarms einer Schaltgabel parallel zur Längsachse spielfrei aufgenommen ist. Hierdurch ist ein robustes, einfach zu fertigendes, schnell montierbares sowie trennbares und weitestgehend spielfreies mechanisches Interface zwischen den getriebeseitigen Schaltgabeln und den Aktuatoren der Getriebeschalteinheit realisiert. Schließlich kann vorgesehen sein, dass in den Deckel des Getriebegehäuses wenigstens ein Anschluss für eine Druckmittelleitung intergiert ist, durch welche ein fluides Druckmittel zu Aktuatoren der Getriebeschalteinheit hindurch leitbar ist. Hierbei kann insbesondere auch vorgesehen sein, dass in den Deckel des Getriebegehäuses ein erster Anschluss intergiert ist, durch den ein fluides Druckmittel zu den erwähnten Gangschalt-Aktuatoren beziehungsweise dem erwähnten Range-Schalt-Aktuator hindurch leitbar ist, dass in den Deckel ein zweiter Anschluss intergiert ist, durch den ein fluides Druckmittel zu einer Getriebewellenbremse hindurchleitbar ist, und dass in den Deckel ein dritter Anschluss intergiert ist, durch den ein fluides Druckmittel zu einer Schaltkupplung des Fahrzeugs hindurchleitbar ist. Durch die Anordnung der genannten Druckmittelanschlüsse in beziehungsweise im Deckel des Getriebegehäuses wird die Erzeugung von solchen Anschlüssen an dem Hauptteil des Getriebegehäuses herstellkostengünstig vermieden.

Weiterhin kann in einer Ausführungsform ein Antriebsstrangsystem vorgesehen sein.

Das genannte Antriebsstrangsystem umfasst ein automatisiertes Schaltgetriebe nach Anspruch 7, wobei das genannte Antriebsstrangsystem zusätzlich eine Getriebewellenbremse und eine Schaltkupplung aufweist. Ein erster Anschluss ist in den Deckel des Getriebegehäuses intergiert, durch den ein fluides Druckmittel zu den Schaltaktuatoren hindurch leitbar ist. Ein zweiter Anschluss ist in den Deckel intergiert, durch den ein fluides Druckmittel zu der Getriebewellenbremse hindurchleitbar ist. Letztendlich ist ein dritter Anschluss in den Deckel intergiert, durch den ein fluides Druckmittel zu der Schaltkupplung hindurchleitbar ist.

Zur weiteren Erläuterung der Erfindung ist der Beschreibung eine Zeichnung beigefügt. In dieser zeigt
Fig. 1 eine perspektivische Draufsicht auf die dem Innenraum eines Getriebegehäuses zugewandte Innenseite eines Deckels eines erfindungsgemäßen automatisierten Schaltgetriebes mit einer Getriebeschalteinheit, und
Fig. 2 eine perspektivische Ansicht einer an einem Getriebegehäuse befestigten Längsführung mit einer ersten, zweiten und dritten Schaltgabel.

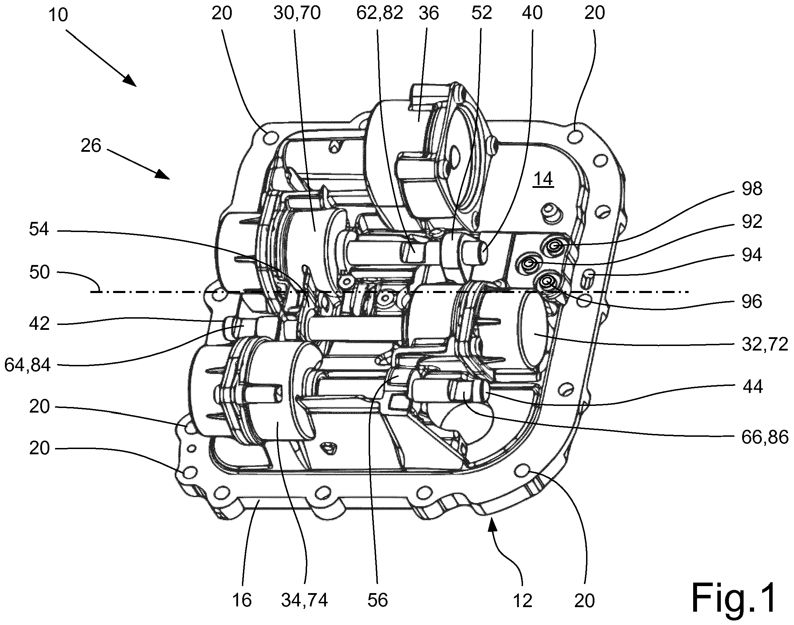

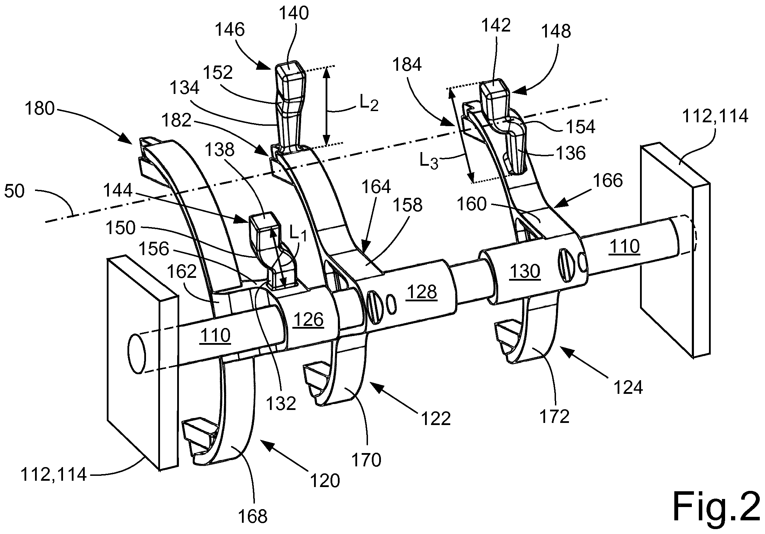

Demnach zeigt die Fig. 1 zeigt eine perspektivische Draufsicht auf eine Innenseite 14 eines Deckels 10 eines erfindungsgemäßen automatisierten Schaltgetriebes 114 mit einer deckelseitig angeordneten Getriebeschalteinheit 26. Der Deckel 10 des in Fig. 2 dargestellten Getriebegehäuses 112 weist gegenüber seiner Innenseite 14 eine Außenseite 12 sowie einen im Wesentlichen randseitig umlaufenden Befestigungsflansch 16 auf. Auf diesen Befestigungsflansch 16 ist eine nicht dargestellte flache Dichtung auflegbar. Der Befestigungsflansch 16 weist eine Vielzahl von nicht durchgängig bezeichneten Bohrungen 20 auf, durch die nicht dargestellte lösbare Befestigungselemente, wie zum Beispiel Schrauben, Bolzen oder dergleichen zur mechanischen Verbindung des Deckels 10 mit dem Getriebegehäuse 112 des automatisierten Schaltgetriebes 114 hindurchführbar sind.

An der Innenseite 14 des Deckels 10 ist die schon erwähnte Getriebeschalteinheit 26 angeordnet, welche drei hier interessierende, als Linearaktuatoren ausgebildete Aktuatoren 30, 32, 34 aufweist. Ein vierter Aktuator 36 dient zur Umschaltung von zwei Getriebestufen eines Range-Getriebes, welches nicht dargestellt ist. Dieser vierte Aktuator 36 ist für die Erläuterung der Erfindung nicht relevant und wird daher im Folgenden nicht weiter beschrieben.

Die drei erstgenannten Aktuatoren 30, 32, 34 sind nebeneinander derart angeordnet, dass die freien Enden derer Betätigungsglieder wechselweise in entgegengesetzte axiale Richtungen zeigen. Mittels dieser Aktuatoren 30, 32, 34 sind drei Schaltgabeln 120, 122, 124 des automatisierten Schaltgetriebes 114 betätigbar, welche in Aufnahmenuten von jeweils zugeordneten Schaltmuffen des Getriebes eingreifen. Die Schaltmuffen sind jeweils drehfest und axial verschiebbar benachbart zu als Losräder ausgebildeten Zahnrädern des Getriebes auf einer nicht dargestellten Getriebewelle angeordnet. Durch eine Axialverschiebung der Schaltmuffen auf der Getriebewelle gelangen diese derart in Kontakt mit einem der beiden jeweils benachbarten Losräder, dass das jeweilige Zahnrad mit der Getriebewelle drehfest verbunden ist. Hierdurch kann mittels des Zahnrades ein Drehmoment von der Getriebewelle auf das Zahnrad oder von dem Zahnrad auf die Getriebewelle übertragen werden. Dies ist dem Getriebefachmann an sich bekannt und braucht daher nicht gesondert dargestellt zu werden.

Die ersten drei Aktuatoren 30, 32, 34 können fluidisch, wie zum Beispiel mit Druckluft oder mit einer Flüssigkeit, wie einem Hydrauliköl oder dergleichen, betrieben sein. Jeder der hier maßgeblichen drei Aktuatoren 30, 32, 34 verfügt über jeweils eine massive, zylindrische Betätigungsstange 40, 42, 44, die parallel zu einer Längsachse 50 des automatisierten Schaltgetriebes 114 ausgerichtet sind. Der erste Aktuator 30 weist hierbei die erste Betätigungsstange 40, der zweite Aktuator 32 die zweite Betätigungsstange 42 und der dritte Aktuator 34 die dritte Betätigungsstange 44 auf. Jede der drei Betätigungsstangen 40, 42, 44 weist jeweils eine Koppelgeometrie 62, 64, 66 auf. Zudem sind die drei Betätigungsstangen 40, 42, 44 jeweils in einer zugeordneten Lagerstelle 52, 54, 56 axial verschiebbar an der Innenseite 14 des Deckels 10 aufgenommen. Die drei Aktuatoren 30, 32, 34 weisen jeweils ein ungefähr zylindrisches Gehäuse 70, 72, 74 auf. Die Böden der Koppelgeometrien 62, 64, 66 der Aktuatoren 30, 32, 34 sind im Wesentlichen parallel zur Längsachse 50 des automatisierten Schaltgetriebes 114 ausgerichtet.

Die Koppelgeometrie 64 des zweiten Aktuators 32 und die Koppelgeometrie 66 des dritten Aktuators 34 sind jeweils endseitig an den zugeordneten Betätigungsstangen 42, 44 ausgebildet. Demgegenüber ist die Koppelgeometrie 62 der Betätigungsstange 40 des ersten Aktuators 30 zwischen der Lagerstelle 52 und dem Gehäuse 70 des ersten Aktuators 30 ausgebildet.

Die Koppelgeometrien 62, 64, 66 der drei Betätigungsstangen 40, 42, 44 sind hier exemplarisch jeweils als einfache Koppelnuten 82, 84, 86 ausgebildet, die quer beziehungsweise senkrecht zur Längsachse 50 verlaufen. Jede der drei Koppelnuten 82, 84, 86 weist eine näherungsweise rechteckige Querschnittsgeometrie auf, welche sich fertigungstechnisch verhältnismäßig leicht herstellen lässt.

Der Deckel 10 verfügt ferner über einen ersten Anschluss 92, einen zweiten Anschluss 94, einen dritten Anschluss 96 sowie einen vierten Anschluss 98 für ein nicht dargestelltes Fluid, wie zum Beispiel Druckluft oder eine zum Betrieb der Aktuatoren 30, 32, 34 geeignete Flüssigkeit. Während der erste Anschluss 92 für die Druckmittelversorgung der vier Aktuatoren 30, 32, 34, 36 dient, sind zwei weitere Anschlüsse 94, 96 für die Druckmittelversorgung einer Getriebewellenbremse beziehungsweise einer Schaltkupplung des Fahrzeugs vorgesehen, welche beide nicht dargestellt sind.

Die Fig. 2 zeigt wie schon kurz erwähnt eine perspektivische Ansicht einer getriebegehäuseseitigen Längsführung 110 mit drei Schaltgabeln 120, 122, 124 des automatisierten Schaltgetriebes 114. Die Längsführung 110 ist durch eine Stange gebildet, welche parallel zur Längsachse 50 des nur angedeuteten Getriebegehäuses 112 an diesem befestigt ist. Die Längsführung 110 ist in dem hier dargestellten Ausführungsbeispiel im Querschnitt zylindrisch, sie kann zur Verdrehsicherung aber auch mehreckig ausgeführt sein.

Die drei Schaltgabeln 120, 122, 124 weisen jeweils eine Führungshülse 126, 128, 130 auf, welche gleitbeweglich und weitgehend spielfrei auf der Längsführung 110 aufgenommen sind. Die drei Führungshülsen 126, 128, 130 der Schaltgabeln 120, 122, 124 weisen zu diesem Zweck jeweils eine näherungsweise hohlzylindrische Geometrie auf. Bei einer anderen, von der Zylinderform abweichenden Geometrie der Längsführung 110 weisen die Führungshülsen 126, 128, 130 eine hierzu geometrisch komplementäre Querschnittsgeometrie auf. Mittels der Schaltgabeln 120, 122, 124 ist wie erwähnt jeweils eine nicht dargestellte Schaltmuffe des automatisierten Schaltgetriebes 114 betätigbar, wodurch gleichfalls nicht eingezeichnete Losräder des Schaltgetriebes 114 mit der zugeordneten Getriebewelle drehfest koppelbar oder von dieser wieder freigebbar sind.

Jede der drei Schaltgabeln 120, 122, 124 weist ferner einen in Bezug zu der Längsführung 110 exzentrisch angeordneten Koppelarm 132, 134, 136 mit einem Koppelabschnitt 138, 140, 142 auf, wobei letztere jeweils am freien Ende 144, 146, 148 eines der drei Koppelarme 132, 134, 136 bevorzugt einstückig ausgebildet sind. Die freien Enden 144, 146, 148 der drei Koppelarme 132, 134, 136 sind im Wesentlichen senkrecht zur Längsachse 50 des Schaltgetriebes ausgerichtet. Der erste Koppelarm 132 ist hierbei an der ersten Schaltgabel 120, der zweite Koppelarm 134 ist an der zweiten Schaltgabel 122 und entsprechend ist der dritte Koppelarm 136 an der dritten Schaltgabel 124 integral ausgebildet. Die Koppelarme 132, 134, 136 sind im montierten Zustand von Deckel 10 und Getriebegehäuse 112 jeweils in Richtung zu der an dem Deckel 10 montierten Getriebeschalteinheit 26 orientiert. Die drei Koppelabschnitte 138, 140, 142 weisen hier bespielhaft jeweils eine näherungsweise kubische oder quaderförmige Formgebung auf.

Im montierten Zustand von Deckel 10 und Getriebegehäuse 112 greift jeweils ein Koppelabschnitt 138, 140, 142 in die zugeordnete Koppelnut 82, 84, 86 der Betätigungsstangen 40, 42, 44 der Aktuatoren 30, 32, 34 weitgehend spielfrei ein, wodurch eine präzise axiale und individuelle Betätigbarkeit der Schaltgabeln 120, 122, 124 zum Auslösen von jeweils einem Gangwechsel des automatisierten Schaltgetriebes 114 möglich ist. Aufgrund der quer zur Längsachse 50 ausgerichteten Koppelnuten 82, 84, 86 der drei Aktuatoren 30, 32, 34 können bei den von den Aktuatoren 30, 32, 34 initiierten Gangwechselvorgängen keine nennenswerten Dreh- oder Kippmomente von den Schaltgabeln 120, 122, 124 in die Aktuatoren 30, 32, 34 der Getriebeschalteinheit 26 eingeleitet werden. Jeder Koppelarm 132, 134, 134 verfügt hier exemplarisch zudem über einen abgekröpften Abschnitt 150, 152, 154, welche einen geometrisch passgenauen Eingriff der Koppelabschnitte 138, 140, 142 in die jeweils zugeordnete Koppelnut 82, 84, 86 erleichtern.

Eine von der rechteckigen oder quaderförmigen Formgebung abweichende geometrische Gestalt der Koppelabschnitte 138, 140, 142 ist gleichfalls möglich, sofern die mit den Koppelabschnitten 138, 140, 142 zusammenwirkenden Koppelgeometrien 62, 64, 66 der Betätigungsstangen 40, 42, 44 der Aktuatoren 30, 32, 34 zumindest bereichsweise geometrisch komplementär zu diesen ausgebildet sind.

An jeder Führungshülse 126, 128, 130 der drei Schaltgabeln 120, 122, 124 ist jeweils ein in etwa radial auswärts gerichteter Haltearm 156, 158, 160 integral ausgebildet, an deren in Bezug zur Längsführung 110 radial auswärts gerichteten Enden 162, 164, 166 jeweils ein bogenförmiger Betätigungsabschnitt 168, 170, 172 zum Eingriff in Nuten der nicht dargestellten Schaltmuffen des automatisierten Schaltgetriebes 114 bevorzugt einstückig ausgebildet ist.

Der erste Koppelarm 132 ist hier beispielhaft fern vom freien Endes 180 des bogenförmigen Betätigungsabschnitts 168 der ersten Schaltgabel 120 im Bereich des Haltearms 156 der ersten Schaltgabel 120 in unmittelbarer Nähe zu dessen Führungshülse 126 ausgebildet. Der zweite Koppelarm 134 ist hier lediglich exemplarisch im Bereich eines freien Endes 182 des bogenförmigen Betätigungsabschnitts 170 der zweiten Schaltgabel 122 integral an dieser ausgebildet. Der dritte Koppelarm 136 befindet sich im Bereich des bogenförmigen Betätigungsabschnitts 172 näherungsweise mittig zwischen dessen freien Ende 184 und dem Haltearm 160 der dritten Schaltgabel 124.

Aufgrund der vorstehend erläuterten Positionierung der Koppelarme 132, 134, 136 an den ihnen jeweils zugeordneten Schaltgabeln 120, 122, 124 können die Aktuatoren 30, 32, 34 innerhalb der deckelseitigen Getriebeschalteinheit 26 parallel versetzt zueinander positioniert sein. Die jeweilige axiale Länge L₁, L₂, L₃ der drei Koppelarme 132, 134, 136 ist hierbei jeweils so bemessen, dass deren Koppelabschnitte 138, 140, 142 in die zugeordneten Koppelgeometrien 62, 64, 66 der Betätigungsstangen 40, 42, 44 der Aktuatoren 30, 32, 34 eingreifen. Eine hiervon abweichende räumliche Anordnung, Länge L₁, L₂, L₃ sowie Formgebung der Koppelarme 132, 134, 136 an den Schaltgabeln 120, 122, 124 ist in Abhängigkeit von den Erfordernissen hinsichtlich der räumlichen Positionierung der drei Aktuatoren 30, 32, 34 der Getriebeschalteinheit 26 an der Innenseite 14 des Deckels 10 des Getriebegehäuses 112 möglich.

Durch die nach Art eines mechanischen Interfaces ineinander greifenden Koppelarme 132, 134, 136 der Schaltgabeln 120, 122, 124 und der Koppelgeometrien 62, 64, 66 der Aktuatoren 30, 32, 34, die im Bedarfsfall schnell wieder voneinander trennbar sind, ist eine besonders problemlose sowie einfache Montage und Demontage der Betätigungsvorrichtung des automatisierten Schaltgetriebes 114 möglich. Darüber hinaus wird die Einleitung von Kräften und/oder Kippmomenten ausgehend von den Schaltgabeln 120, 122, 124 in die Getriebeschalteinheit 26 weitestgehend vermieden.

### Bezugszeichenliste (Teil der Beschreibung)

- 10: Deckel des Getriebegehäuses
- 12: Außenseite des Deckels
- 14: Innenseite des Deckels
- 16: Befestigungsflansch des Deckels
- 20: Bohrungen im Deckel
- 26: Getriebeschalteinheit
- 30: Erster Aktuator
- 32: Zweiter Aktuator
- 34: Dritter Aktuator
- 36: Vierter Aktuator
- 40: Betätigungsstange des ersten Aktuators 30
- 42: Betätigungsstange des zweiten Aktuators 32
- 44: Betätigungsstange des dritten Aktuators 34
- 50: Längsachse des Schaltgetriebe
- 52: Lagerstelle für die Betätigungsstange 40
- 54: Lagerstelle für die Betätigungsstange 42
- 56: Lagerstelle für die Betätigungsstange 44
- 62: Koppelgeometrie der Betätigungsstange 40
- 64: Koppelgeometrie der Betätigungsstange 42
- 66: Koppelgeometrie der Betätigungsstange 44
- 70: Gehäuse des ersten Aktuators
- 72: Gehäuse des zweiten Aktuators
- 74: Gehäuse des dritten Aktuators
- 82: Koppelnut in der Betätigungsstange 40
- 84: Koppelnut in der Betätigungsstange 42
- 86: Koppelnut in der Betätigungsstange 44
- 92: Erster Anschluss für ein Fluid
- 94: Zweiter Anschluss für ein Fluid
- 96: Dritter Anschluss für ein Fluid
- 98: Vierter Anschluss für ein Fluid
- 110: Längsführung
- 112: Getriebegehäuse
- 114: Automatisiertes Schaltgetriebe
- 120: Erste Schaltgabel
- 122: Zweite Schaltgabel
- 124: Dritte Schaltgabel
- 126: Führungshülse der Schaltgabel 120
- 128: Führungshülse der Schaltgabel 122
- 130: Führungshülse der Schaltgabel 124
- 132: Koppelarm an der Schaltgabel 120
- 134: Koppelarm an der Schaltgabel 122
- 136: Koppelarm an der Schaltgabel 124
- 138: Koppelabschnitt des Koppelarms 132
- 140: Koppelabschnitt des Koppelarms 134
- 142: Koppelabschnitt des Koppelarms 136
- 144: Freies Ende des Koppelarms 132
- 146: Freies Ende des Koppelarms 134
- 148: Freies Ende des Koppelarms 136
- 150: Abgekröpfter Abschnitt des Koppelarms 132
- 152: Abgekröpfter Abschnitt des Koppelarms 134
- 154: Abgekröpfter Abschnitt des Koppelarms 136
- 156: Haltearm der Schaltgabel 120
- 158: Haltearm der Schaltgabel 122
- 160: Haltearm der Schaltgabel 124
- 162: Ende des Haltearms 156
- 164: Ende des Haltearms 158
- 166: Ende des Haltearms 160
- 168: Bogenförmiger Betätigungsabschnitt der Schaltgabel 120
- 170: Bogenförmiger Betätigungsabschnitt der Schaltgabel 122
- 172: Bogenförmiger Betätigungsabschnitt der Schaltgabel 124
- 180: Freies Ende des bogenförmigen Betätigungsabschnitt 168
- 182: Freies Ende des bogenförmigen Betätigungsabschnitt 170
- 184: Freies Ende des bogenförmigen Betätigungsabschnitts 172
- L₁: Länge des Koppelarms 132
- L₂: Länge des Koppelarms 134
- L₃: Länge des Koppelarms 136

## Patentansprüche

1. Automatisiertes Schaltgetriebe (114) für ein Kraftfahrzeug, mit einer Getriebeschaleinheit (26) und einem Getriebegehäuse (112), welches einen lösbaren Deckel (10) aufweist, wobei die Getriebeschalteinheit (26) an dem lösbaren Deckel (10) angeordnet ist, wobei die Getriebeschalteinheit (26) Aktuatoren (30, 32, 34) zur Betätigung von diesen jeweils zugeordneten Schaltgabeln (120, 122, 124) aufweist, und bei dem mittels jeder Schaltgabel (120, 122, 124) jeweils eine zugeordnete Schaltmuffe des Schaltgetriebes (114) koaxial zu einer Getriebewelle verschiebbar ist, wobei in dem Getriebegehäuse (112) eine parallel zu einer Längsachse (50) des Schaltgetriebes (114) verlaufende Längsführung (110) befestigt ist, wobei auf der Längsführung (110) die wenigstens zwei Schaltgabeln (120, 122, 124) längsverschiebbar aufgenommen sind, wobei jede Schaltgabel (120, 122, 124) einen in Bezug zur Längsführung (110) exzentrisch angeordneten Koppelarm (132, 134, 136) aufweist, wobei jeder Aktuator (30, 32, 34) eine axial verschiebbare Betätigungsstange (40, 42, 44) mit einer Koppelgeometrie (62, 64, 66) aufweist, und wobei jeder Koppelarm (132, 134, 136) im zusammengefügten Zustand von Deckel (10) und Getriebegehäuse (112) mit jeweils einer zugeordneten Koppelgeometrie (62, 64, 66) eines jeweils zugeordneten Aktuators (30, 32, 34) derart zusammenwirkt, dass Linearbewegungen der Betätigungsstangen (40, 42, 44) der Aktuatoren (30, 32, 34) auf die Schaltgabeln (120, 122, 124) zur Verschiebung derselben auf der Längsführung (110) übertragbar sind, dass die Betätigungsstangen (40, 42, 44) der Aktuatoren (30, 32, 34) an der Innenseite (12) des Deckels (10) des Getriebegehäuses (112) parallel zur Längsachse (50) des Schaltgetriebes (114) ausgerichtet angeordnet sind,
**dadurch gekennzeichnet dass** die jeweils freien Enden der Betätigungsstangen (40, 42, 44) unmittelbar benachbarter Aktuatoren (30, 32, 34) in axial entgegengerichtete Richtungen weisen, dass die Getriebeschalteinheit (26) mit mindestens drei Aktuatoren (30, 32, 34) zur Betätigung von drei Schaltgabeln (120, 122, 124) vorgesehen ist, dass das automatisierte Schaltgetriebe (114) drei Schaltmuffen aufweist, dass die Bestätigungsstangen (40, 42, 44) der Aktuatoren (30, 32, 34) eine zylindrische Geometrie aufweisen, dass jede der Schaltgabeln (120, 122, 124) eine hohlzylindrische Führungshülse (126, 128, 130) mit einem Haltearm (156, 158, 160) aufweist, dass jeweils an einem von der Führungshülse (126, 128, 130) weggerichteten Ende (162, 164, 166) eines jeden Haltearms (156, 158, 160) ein bogenförmiger Betätigungsabschnitt (168, 170, 172) für den Eingriff in die jeweils zugeordnete Schaltmuffe ausgebildet ist, dass an der ersten Schaltgabel (120) der erste Koppelarm (132) in der Nähe der Führungshülse (126) am zugeordneten Haltearm (156) ausgebildet ist, dass an der zweiten Schaltgabel (122) der zweite Koppelarm (134) am freien Ende (182) des bogenförmigen Betätigungsabschnitts (170) ausgebildet ist, und dass der dritte Koppelarm (136) im Bereich des bogenförmigen Betätigungsabschnitts (172) mittig zwischen dessen freien Ende (184) und dem Haltearm (160) der dritten Schaltgabel (124) ausgebildet ist.

2. Schaltgetriebe nach Anspruch 1, **dadurch gekennzeichnet, dass** jede der Schaltgabeln (120, 122, 124) mittels ihrer Führungshülse (126, 128, 130) auf der Längsführung (110) parallel zu der Längsachse (50) des Schaltgetriebes (114) spielfrei verschiebbar aufgenommen ist.

3. Schaltgetriebe nach einem der vorherigen Ansprüche, **dadurch gekennzeichnet, dass** die Längsführung (110) sowie die Führungshülsen (126, 128, 130) eine unrunde oder mehreckige Querschnittgeometrie aufweisen.

4. Schaltgetriebe nach Anspruch 1, **dadurch gekennzeichnet, dass** freie Ende (144, 146, 148) der Koppelarme (132, 134, 136) jeweils einen Koppelabschnitt (138, 140, 142) aufweist, welche senkrecht zur Längsachse (50) des Schaltgetriebes ausgerichtet sind sowie jeweils in Richtung zu den Betätigungsstangen (40, 42, 44) der zugeordneten Aktuatoren (30, 32, 34) weisen.

5. Schaltgetriebe nach Anspruch 1 oder Anspruch 4, **dadurch gekennzeichnet, dass** jeder Koppelarm (132, 134, 136) mindestens einen abgekröpften Abschnitt (150, 152, 154) aufweist.

6. Schaltgetriebe nach Anspruch 1, **dadurch gekennzeichnet, dass** jede Betätigungsstange (40, 42, 44) eines Aktuators (30, 32, 34) die Koppelgeometrie (62, 64, 66) aufweist, die jeweils durch eine quer zur Längsachse (50) des Schaltgetriebes (114) verlaufende Koppelnut (82, 84, 86) gebildet ist, wobei im zusammen gefügten Zustand von Getriebegehäuse (112) und Deckel (10) in jeder Koppelnut (82, 84, 86) jeweils ein Koppelabschnitt (138, 140, 142) eines Koppelarms (132, 134, 136) einer Schaltgabel (120, 122, 124) parallel zur Längsachse (50) spielfrei aufgenommen ist.

7. Schaltgetriebe nach einem der vorherigen Ansprüche, **dadurch gekennzeichnet, dass** in den Deckel (10) des Getriebegehäuses (112) wenigstens ein Anschluss (92, 94, 96, 98) für eine Druckmittelleitung intergiert ist, durch welche ein fluides Druckmittel zu Aktuatoren (30, 32, 34, 36) hindurch leitbar ist.

8. Schaltgetriebe nach Anspruch 7, **dadurch gekennzeichnet, dass** in den Deckel (10) des Getriebegehäuses (112) ein erster Anschluss (92) intergiert ist, durch den ein fluides Druckmittel zu den Schalt-Aktuatoren (30, 32, 34, 36) hindurch leitbar ist, dass in den Deckel (10) ein zweiter Anschluss (94) intergiert ist, durch den ein fluides Druckmittel zu einer Getriebewellenbremse hindurchleitbar ist, und dass in den Deckel (10) ein dritter Anschluss (96) intergiert ist, durch den ein fluides Druckmittel zu einer Schaltkupplung hindurchleitbar ist.

9. Ein Antriebsstrangsystem umfasst ein Automatisiertes Schaltgetriebe nach Anspruch 7, **dadurch gekennzeichnet, dass** das genannte Antriebsstrangsystem zusätzlich eine Getriebewellenbremse und eine Schaltkupplung aufweist, wobei in den Deckel (10) des Getriebegehäuses (112) ein erster Anschluss (92) intergiert ist, durch den ein fluides Druckmittel zu den Schalt-Aktuatoren (30, 32, 34, 36) hindurch leitbar ist, dass in den Deckel (10) ein zweiter Anschluss (94) intergiert ist, durch den ein fluides Druckmittel zu der Getriebewellenbremse hindurchleitbar ist, und dass in den Deckel (10) ein dritter Anschluss (96) intergiert ist, durch den ein fluides Druckmittel zu der Schaltkupplung hindurchleitbar ist.

## Claims

1. Automated manual transmission (114) for a motor vehicle, comprising a transmission shifting unit (26) and a transmission housing (112) which has a detachable cover (10), wherein the transmission shifting unit (26) is arranged on the detachable cover (10), wherein the transmission shifting unit (26) has actuators (30, 32, 34) for actuating shift forks (120, 122, 124) associated with each of said actuators, and by means of each shift fork (120, 122, 124), an associated shift sleeve of the manual transmission (114) can be moved coaxially to a transmission shaft in each case, wherein a longitudinal guide (110) extending in parallel with longitudinal axis (50) of the manual transmission (114) is fastened in the transmission housing (112), wherein the at least two shift forks (120, 122, 124) are accommodated on the longitudinal guide (110) in a longitudinally movable manner, and each shift fork (120, 122, 124) has a clutch arm (132, 134, 136) arranged eccentrically in relation to the longitudinal guide (110), wherein each actuator (30, 32, 34) has an axially movable actuating rod (40, 42, 44) having a clutch geometry (62, 64, 66), and wherein each clutch arm (132, 134, 136), in the assembled state of the cover (10) and the transmission housing (112), interacts with an associated clutch geometry (62, 64, 66) of an associated actuator (30, 32, 34) in such a way that linear movements of the actuating rods (40, 42, 44) of the actuators (30, 32, 34) can be transferred to the shift forks (120, 122, 124) to moving the forks on the longitudinal guide (110), and that the actuating rods (40, 42, 44) of the actuators (30, 32, 34) are arranged on the inside (12) of the cover (10) of the transmission housing (112) in parallel with the longitudinal axis (50) of the manual transmission (114), **characterized in that the**
respective free ends of the actuating rods (40, 42, 44) of immediately adjacent actuators (30, 32, 34) point in axially opposite directions, **in that** the transmission shifting unit (26) is provided with at least three actuators (30, 32, 34) for actuating three shift forks (120, 122, 124), **in that** the automated manual transmission (114) has three shift sleeves, **in that** the actuating rods (40, 42, 44) of the actuators (30, 32, 34) have a cylindrical geometry, **in that** each of the shift forks (120, 122, 124) has a hollow cylindrical guide sleeve (126, 128, 130) having a holding arm (156, 158, 160), **in that** an arcuate actuating portion (168, 170, 172) is formed in each case on an end (162, 164, 166) of each holding arm (156, 158, 160), which is directed away from the guide sleeves (126, 128, 130), for engaging in the associated shift sleeve, **in that** on the first shift fork (120), the first clutch arm (132) is formed in the vicinity of the guide sleeve (126) on the associated holding arm (156), **in that** on the second shift fork (122), the second clutch arm (134) is formed on the free end (182) of the arcuate actuating portion (170), and **in that** the third clutch arm (136) is formed in the region of the arcuate actuating portion (172) centrally between its free end (184) and the holding arm (160) of the third shift fork (124).

2. Manual transmission according to claim 1, **characterized in that** each of the shift forks (120, 122, 124) is received by means of its guide sleeve (126, 128, 130) on the longitudinal guide (110) in parallel with the longitudinal axis (50) of the manual transmission (114) so as to be movable without play.

3. Manual transmission according to either of the preceding claims, **characterized in that** the longitudinal guide (110) and the guide sleeves (126, 128, 130) have a non-circular or polygonal cross-sectional geometry.

4. Manual transmission according to claim 1, **characterized in that** free ends (144, 146, 148) of the clutch arms (132, 134, 136) each have a clutch portion (138, 140, 142), which portions are aligned perpendicularly to the longitudinal axis (50) of the manual transmission and each point in the direction of the actuating rods (40, 42, 44) of the associated actuators (30, 32, 34).

5. Manual transmission according to claim 1 or claim 4, **characterized in that** each clutch arm (132, 134, 136) has at least one bent portion (150, 152, 154).

6. Manual transmission according to claim 1, **characterized in that** each actuating rod (40, 42, 44) of an actuator (30, 32, 34) has the clutch geometry (62, 64, 66), which is formed in each case by a clutch groove (82, 84, 86) extending transversely to the longitudinal axis (50) of the manual transmission (114), wherein a clutch portion (138, 140, 142) of a clutch arm (132, 134, 136) of a shift fork (120, 122, 124) is accommodated in each clutch groove (82, 84, 86) in parallel with the longitudinal axis (50) and without play in the assembled state of the transmission housing (112) and the cover (10).

7. Manual transmission according to any of the preceding claims, **characterized in that** at least one connection (92, 94, 96, 98) for a pressure medium line is integrated into the cover (10) of the transmission housing (112), through which line a fluid pressure medium can be conducted to actuators (30, 32, 34, 36).

8. Manual transmission according to claim 7, **characterized in that** a first connection (92) is integrated into the cover (10) of the transmission housing (112), through which a fluid pressure medium can be conducted to the switching actuators (30, 32, 34, 36), **in that** a second connection (94) is integrated into the cover (10), through which a fluid pressure medium can be conducted to a transmission shaft brake, and **in that** a third connection (96) is integrated into the cover (10), through which a fluid pressure medium can be conducted to a shift clutch.

9. Drive train system comprising an automated manual transmission according to claim 7, **characterized in that** said drive train system additionally has a transmission shaft brake and a shift clutch, wherein a first connection (92) is integrated into the cover (10) of the transmission housing (112), through which a fluid pressure medium can be conducted to the shift actuators (30, 32, 34, 36), **in that** a second connection (94) is integrated into the cover (10), through which a fluid pressure medium can be conducted to the transmission shaft brake, and **in that** a third connection (96) is integrated into the cover (10), through which a fluid pressure medium can be conducted to the shift clutch.

## Revendications

1. Boîte de vitesses (114) automatique pour un véhicule automobile, comportant une unité de changement de vitesse (26) et un carter de boîte de vitesses (112) qui présente un couvercle (10) amovible, dans laquelle l'unité de changement de vitesse (26) est disposée sur le couvercle (10) amovible, dans laquelle l'unité de changement de vitesse (26) présente des actionneurs (30, 32, 34) destinés à l'actionnement de fourchettes de changement de vitesse (120, 122, 124) qui leur sont respectivement associées, et dans laquelle, au moyen de chaque fourchette de changement de vitesse (120, 122, 124), respectivement un manchon de changement de vitesse associé de la boîte de vitesses (114) peut coulisser de manière coaxiale à un arbre de boîte de vitesses, dans laquelle un guidage longitudinal (110) s'étendant parallèlement à un axe longitudinal (50) de la boîte de vitesses (114) est monté dans le carter de boîte de vitesses (112), dans laquelle les au moins deux fourchettes de changement de vitesse (120, 122, 124) sont reçues sur le guidage longitudinal (110) de manière à coulisser dans le sens longitudinal, dans laquelle chaque fourchette de changement de vitesse (120, 122, 124) présente un bras d'accouplement (132, 134, 136) disposé de manière excentrée par rapport au guidage longitudinal (110), dans laquelle chaque actionneur (30, 32, 34) présente une tige d'actionnement (40, 42, 44) comportant une géométrie d'accouplement (62, 64, 66), laquelle tige d'actionnement peut coulisser de manière axiale, et dans laquelle chaque bras d'accouplement (132, 134, 136), lorsque le couvercle (10) et le carter de boîte de vitesses (112) sont assemblés, coopère avec respectivement une géométrie d'accouplement (62, 64, 66) associée d'un actionneur (30, 32, 34) respectivement associé, de telle sorte que des mouvements linéaires des tiges d'actionnement (40, 42, 44) des actionneurs (30, 32, 34) peuvent être transmis aux fourchettes de changement de vitesse (120, 122, 124) pour le coulissement de celles-ci sur le guidage longitudinal (110), que les tiges d'actionnement (40, 42, 44) des actionneurs (30, 32, 34) sont alignées sur le côté intérieur (12) du couvercle (10) du carter de boîte de vitesses (112), parallèlement à l'axe longitudinal (50) de la boîte de vitesses (114), **caractérisée en ce que** les
extrémités libres respectives des tiges de changement de vitesse (40, 42, 44) d'actionneurs (30, 32, 34) directement adjacents sont orientées dans des directions axialement opposées, **en ce que** l'unité de changement de vitesse (26) comportant au moins trois actionneurs (30, 32, 34) est prévue pour l'actionnement de trois fourchettes de changement de vitesse (120, 122, 124), **en ce que** la boîte de vitesses (114) automatique présente trois manchons de changement de vitesse, **en ce que** les tiges d'actionnement (40, 42, 44) des actionneurs (30, 32, 34) présentent une géométrie cylindrique, **en ce que** chacune des fourchettes de changement de vitesse (120, 122, 124) présente une douille de guidage (126, 128, 130) cylindrique creuse comportant un bras de support (156, 158, 160), **en ce que,** respectivement à une extrémité (162, 164, 166) de chaque bras de support (156, 158, 160), il est réalisé une section d'actionnement (168, 170, 172) arquée destinée à venir en prise avec le manchon de changement de vitesse respectivement associé, laquelle extrémité est orientée à l'opposé de la douille de guidage (126, 128, 130), **en ce que,** sur la première fourchette de changement de vitesse (120), le premier bras d'accouplement (132) est réalisé à proximité de la douille de guidage (126) se trouvant sur le bras de support (156) associé, **en ce que,** sur la deuxième fourchette de changement de vitesse (122), le deuxième bras d'accouplement (134) est réalisé à l'extrémité libre (182) de la section d'actionnement (170) arquée, **et en ce que** le troisième bras d'accouplement (136) est réalisé dans la zone de la section d'actionnement (172) arquée, au milieu entre son extrémité libre (184) et le bras de support (160) de la troisième fourchette de changement de vitesse (124).

2. Boîte de vitesses selon la revendication 1, **caractérisée en ce que** chacune des fourchettes de changement de vitesse (120, 122, 124) est reçue de manière à pouvoir coulisser sans jeu, à l'aide de sa douille de guidage (126, 128, 130), sur le guide longitudinal (110) parallèlement à l'axe longitudinal (50) de la boîte de vitesses (114).

3. Boîte de vitesses selon l'une des revendications précédentes, **caractérisée en ce que** le guide longitudinal (110) ainsi que les douilles de guidage (126, 128, 130) présentent une géométrie de section transversale non circulaire ou polygonale.

4. Boîte de vitesses selon la revendication 1, **caractérisée en ce que** l'extrémité (144, 146, 148) libre des bras d'accouplement (132, 134, 136) présente respectivement une section d'accouplement (138, 140, 142), les différentes sections d'accouplement étant alignées perpendiculairement à l'axe longitudinal (50) de la boîte de vitesses et étant orientées respectivement en direction des tiges d'actionnement (40, 42, 44) des actionneurs (30, 32, 34) associés.

5. Boîte de vitesses selon la revendication 1 ou la revendication 4, **caractérisée en ce que** chaque bras d'accouplement (132, 134, 136) présente au moins une section (150, 152, 154) coudée.

6. Boîte de vitesses selon la revendication 1, **caractérisée en ce que** chaque tige d'actionnement (40, 42, 44) d'un actionneur (30, 32, 34) présente la géométrie d'accouplement (62, 64, 66) qui est formée respectivement par une rainure d'accouplement (82, 84, 86) s'étendant transversalement à l'axe longitudinal (50) de la boîte de vitesses (114), dans laquelle, lorsque le carter de boîte de vitesses (112) et le couvercle (10) sont assemblés, une section d'accouplement (138, 140, 142) d'un bras d'accouplement (132, 134, 136) d'une fourchette de changement de vitesse (120, 122, 124) est respectivement reçue sans jeu, parallèlement à l'axe longitudinal (50), dans chaque rainure d'accouplement (82, 84, 86).

7. Boîte de vitesses selon l'une des revendications précédentes, **caractérisée en ce que,** dans le couvercle (10) du carter de boîte de vitesses (112), il est incorporé au moins un raccord (92, 94, 96, 98) pour une conduite de milieu sous pression à travers laquelle un milieu sous pression fluide peut être conduit vers des actionneurs (30, 32, 34, 36).

8. Boîte de vitesses selon la revendication 7, **caractérisée en ce que,** dans le couvercle (10) du carter de boîte de vitesses (112), il est incorporé un premier raccord (92) à travers lequel un milieu sous pression fluide peut être conduit vers les actionneurs de changement de vitesse (30, 32, 34, 36), **en ce que,** dans le couvercle (10), il est incorporé un deuxième raccord (94) à travers lequel un milieu sous pression fluide peut être conduit vers un frein d'arbre de boîte de vitesses, **et en ce que,** dans le couvercle (10), il est incorporé un troisième raccord (96) à travers lequel un milieu sous pression fluide peut être conduit vers un embrayage.

9. Système de transmission comprenant une boîte de vitesses automatique selon la revendication 7, **caractérisé en ce que** ledit système de transmission présente en outre un frein d'arbre de boîte de vitesses et un embrayage, dans lequel, dans le couvercle (10) du carter de boîte de vitesses (112), il est incorporé un premier raccord (92) à travers lequel un milieu sous pression fluide peut être conduit vers les actionneurs de changement de vitesse (30, 32, 34, 36), **en ce que,** dans le couvercle (10), il est incorporé un deuxième raccord (94) à travers lequel un milieu sous pression fluide peut être conduit vers le frein d'arbre de boîte de vitesses, **et en ce que,** dans le couvercle (10), il est incorporé un troisième raccord (96) à travers lequel un milieu sous pression fluide peut être conduit vers l'embrayage.
